# EUROPEAN PATENT APPLICATION

(11) **EP 3 995 457 A1**
(43) Date of publication of application: **11.05.2022**
(21) Application number: 21207308.4
(22) Date of filing: 09.11.2021
(51) Int. Cl.: C02F 1/28, C02F 1/44, B01J 20/20, C01B 32/198, B01D 61/14, B01D 61/16, C02F 101/20, C02F 101/30, C02F 103/34

(54) **METHOD FOR THE TREATMENT OF A LIQUID**

(30) Priority: 09.11.2020 IT 202000026726
(71) Applicant: Consiglio Nazionale Delle Ricerche, 00185 Roma (IT); Medica S.p.A., 41036 Medolla (IT)
(72) Inventor: MELUCCI, Manuela, 00185 ROMA (IT); PALERMO, Vincenzo, 00185 ROMA (IT); KOVTUN, Alessandro, 00185 ROMA (IT); NAVACCHIA, Maria Luisa, 00185 ROMA (IT); BOCCHI, Letizia, 41036 MEDOLLA (MO) (IT)
(74) Representative: Mangini, Simone

(57) **Abstract**

A method for the treatment of a starting liquid (SL) containing pollutants (P); graphene oxide (GO) is added to the starting liquid so as to adsorb at least part of said pollutants (P) and obtain a pre-treated liquid (PL), which is caused to flow through a porous membrane (M) comprising a plurality of hollow fibres so that the graphene oxide (GO) is blocked and a treated liquid (TL) having a smaller pollutant content than the starting liquid is obtained.

## Description

### CROSS-REFERENCE TO RELATED APPLICATIONS

This patent application claims priority from Italian patent application no. 102020000026726 filed on November 9, 2020.

### TECHNICAL FIELD

The present invention relates to a method for the treatment of a liquid and to a kit to implement such a method.

### BACKGROUND OF THE INVENTION

Membranes and fibres made of different polymer materials are used in the field of fluid purification.

Notwithstanding the numerous efforts to prepare new filters that are capable of improving separation of the various components, there is still the need to identify materials capable of selectively separating some substances (the separation of some pollutant substances is still not considered satisfactory).

Many of the materials proposed to date are particularly difficult and costly to produce and/or not sufficiently strong and long-lasting.

Moreover, particularly for the purification of liquids (for example water), the solutions currently used are technically very complex and costly (such as reverse osmosis) which require equipment that is bulky (difficult to transport) and complicated.

The object of the present invention is to provide a method for the treatment of a liquid and a kit to implement such a method with which it is possible to overcome, at least partly, the drawbacks of the prior art, and which can also be implemented easily and inexpensively.

### SUMMARY

According to present invention, there are provided a method for the treatment of a liquid and a kit to implement such a method as set forth in the appended independent claims and, preferably, in any one of the claims directly or indirectly dependent on the independent claims.

### BRIEF DESCRIPTION OF THE FIGURES

The invention is hereinafter described with reference to the accompanying figures, which depict some non-limiting examples thereof, wherein:
- Fig. 1 schematically depicts a device for implementing the method in accordance with the present invention;
- Fig. 2 schematically depicts some steps of the method in accordance with the present invention;
- Fig. 3 schematically depicts two alternative operating modes of a step of the method in accordance with the present invention; and
- Fig. 4 is a graph of experimental tests conducted that show the surprising efficacy of the method in accordance with the present invention (the milligrams of OFLOX added to 100 ml of water are indicated in the abscissa and the percentage of OFLOX removal for each test is indicated in the ordinate).

### DETAILED DESCRIPTION

In accordance to a first aspect of the present invention there is provided for a method for the treatment of a starting liquid containing pollutants.

The method comprises an addition step, during which graphene oxide is added to the starting liquid so as to adsorb at least part of said pollutants and obtain a pre-treated liquid; and a filtering step, during which the pre-treated liquid is caused to flow through a membrane so that the graphene oxide is blocked and a treated liquid having a smaller pollutant content than the starting liquid is obtained downstream of the membrane.

In particular, the filtering step is (at least partly) subsequent to the addition step.

In particular, the pollutants comprise (are) one or more organic pollutants (for example: medicinal products, pigments, perfluorinated compounds, products for cosmetics and personal hygiene - more in general organic molecules for various applications). Additionally or alternatively, the pollutants comprise (are) one or more inorganic pollutants (in particular metallic pollutants such as copper).

According to some non-limiting embodiments, the pollutants comprise (are) one or more chemical compounds selected from those described in Effects of Solution Chemistry on Adsorption of Selected Pharmaceuticals and Personal Care Products (PPCPs) by Graphenes and Carbon Nanotubes, Fei-fei Liu et al, Environmental Science & Technology 2014, pp. 13197-13206; Adsorption of aromatic organic contaminants by graphene nanosheets: Comparison with carbon nanotubes and activated carbon, Onur Guven Apul et al., Water Research 47 (2013) 1648-1654; Overcoming implementation barriers for nanotechnology in drinking water treatment, Paul Westerhoff et al., Environ. Sci. Nano, 2016, 3, 1241-1253.

According to some non-limiting embodiments, the starting liquid is mainly water and, in particular, comprises at least about 70% (in particular, at least 90%) by weight, with respect to the total weight of the liquid, of water.

Advantageously but not necessarily, the graphene oxide consists of sheets with a lateral size of at least about 150 nm, in particular of at least about 200 nm, more in particular of at least about 300 nm.

Alternatively or additionally, the (substantially flat) sheets of graphene oxide have a lateral size up to about 1 µm, in particular up to about 800 nm, more in particular, up to about 600 nm, even more in particular up to about 400 nm.

More precisely but not necessarily, the (substantially flat) sheets of graphene oxide have a thickness of less than about 5 nm, in particular less than about 2 nm (in particular, greater than about 0.1 nm).

The sizes (lateral and/or thickness) of the sheets of graphene oxide (and the thickness of the membrane - see below) are (can be) determined by measuring the size (largest and smallest, for lateral size and thickness, respectively) of each sheet in a standard manner by means of an atomic force microscope (AFM) or scanning electron microscope (SEM) or transmission electron microscope (TEM) according to known methods.

In some specific cases, the sizes (lateral and/or thickness) of the sheets of graphene oxide (and the thickness of the membrane - see below) are (can be) measured by scanning electron microscope (SEM).

In particular, the graphene oxide consists of sheets that are mainly (substantially completely) separate from one another (i.e., not aggregated) and, more in particular, substantially flat.

Advantageously but not necessarily, the graphene oxide consists of (substantially flat) sheets with average lateral size of at least about 150 nm, in particular of at least about 200 nm, more in particular of at least about 300 nm.

Alternatively or additionally, the (substantially flat) sheets of graphene oxide have an average lateral size of up to about 1 µm, in particular up to about 800 nm, more in particular up to about 600 nm, even more in particular up to about 400 nm.

More precisely but not necessarily, the (substantially flat) sheets of graphene oxide have an average thickness of less than about 5 nm, in particular less than about 2 nm (in particular, greater than about 0.1 nm).

The average sizes (lateral and/or thickness) of the sheets of graphene oxide are (can be) determined by calculating the average of the measurements (calculated as indicated above) of fifty sheets selected randomly.

Advantageously but not necessarily, the method comprises a sonication step, which is prior to the addition step and during which the graphene oxide is sonicated, in particular by means of ultrasounds, in particular so that the sheets of graphene oxide are disaggregated and laid flat (and hence have the sizes - more precisely the lateral sizes and the thicknesses - defined above).

According to some non-limiting embodiments, during the sonication step, the graphene oxide is sonicated while suspended in a solvent (for example selected in the group consisting of: water, ethanol, acetonitrile, THF - tetrahydrofuran - and mixtures thereof). In particular, during the sonication step, the graphene oxide is sonicated while suspended in a solvent comprising (in particular, comprising mainly; more in particular, consisting of) water.

Advantageously but not necessarily, during the sonication step, the graphene oxide is sonicated (in particular, in the aforesaid solvent) for at least about 10 minutes (in particular, at least about 30 minutes; more in particular, at least about 40 minutes; even more in particular, at least about 50 minutes).

According to some non-limiting embodiments, during the sonication step, the graphene oxide is sonicated (in particular, in the aforesaid solvent) for up to about 2 hours (in particular, up to about 90 minutes; more in particular, up to about 75 minutes).

Advantageously but not necessarily, during the addition step, a suspension of graphene oxide in the starting liquid is obtained; the suspension is maintained for at least about 5 minutes (in particular, for at least about 10 minutes; more in particular, for at least about 15 minutes; even more in particular, for at least about 25 minutes) before the filtering step. In this way, the pre-treated liquid is obtained (in particular, the graphene oxide adsorbs at least part of the pollutants contained in the starting solution).

Alternatively or additionally, the suspension is maintained for up to 1 hour (in particular, up to about 45 minutes) before the filtering step.

Advantageously but not necessarily (during the addition step), the suspension is placed under stirring, in particular for at least about 5 minutes, in particular, for at least about 10 minutes; more in particular, for at least about 15 minutes; even more in particular, for at least about 25 minutes) before the filtering step. In this way adsorption is improved.

Alternatively or additionally, the suspension is placed under stirring for up to 1 hour (in particular, up to about 45 minutes) before the filtering step.

According to some non-limiting embodiments, during the addition step, at least about 0.1 mg (in particular, at least about 0.5 mg; more in particular, at least 1 mg) of graphene oxide is added per millilitre of starting liquid.

Alternatively or additionally, during the addition step, up to about 5 mg (in particular, up to about 4 mg; more in particular, up to about 3 mg) of graphene oxide is added per millilitre of starting liquid.

Advantageously but not necessarily, the aforesaid membrane is a porous membrane, in particular a polymer, more in particular for filtration (even more in particular, for micro or ultrafiltration).

Advantageously but not necessarily, the membrane has oxygen atoms capable of being part of hydrogen bonds.

In some non-limiting cases, the membrane has a plurality of (delocalized) conjugated Π systems. In particular, the membrane has a plurality of aromatic groups (in other words, in these cases, the conjugated Π systems are aromatic groups).

Advantageously, the membrane has a thickness from about 40 (more precisely, from about 45) to about 400 (more precisely, to about 100) µm. In some cases, the membrane has a thickness of up to about 60 (in particular, up to about 50) µm.

Advantageously but not necessarily, the membrane has a cut-off up to about 1500 kDalton (in particular, up to 1000 kDalton; more in particular, up to 100 kDalton).

According to some embodiments, the membrane has a cut-off of (at least) about 10 (more precisely, of 14) kDalton. The term cut-off is meant as the molecular weight of the species (polymers, bacteria, viruses etc.) that are retained to 90% by the membrane.

The cut-offs are determined (in particular, indirectly) by conducting (filtration) retention tests with molecules at known (and decreasing) molecular weight.

In particular, the molecules in question are proteins or dextrans conjugated with fluorescent markers (fluorescent labelled dextrans) or dyed. Typically, fluorescent labelled dextrans are used. In brief, a solution is created containing one or more molecules at known molecular weight (MW) and is filtered through the membrane. If the detection technique permits this, a solution with several molecules at known MW to be filtered simultaneously can be used. The concentration can vary according to the size and to the number of fibres of the device. When albumin is used, the concentration is of 35-40 mg/ml, the same as the physiological concentration.

If fluorescent labelled dextrans are used, the concentration used is of about 20 mg/ml. The fluorescent labelled dextrans have a MW of 4, 70, 150 and 2000 kDa.

The concentration of the molecules at known MW is detected (for tangential flow filtration) in inlet, in outlet from the filter and in the filtrate. Various techniques are available for measuring the concentration depending on the protein / dextran and on the possible conjugation. For example, detection can take place using spectrophotometric, immunoenzymatic, fluorimetric, electrophoretic or chromatographic techniques. The cut-off of the filter corresponds to the molecular weight of the lowest molecule that is retained by the membrane with a sieving coefficient of at least 9.0. For tangential flow filtration the sieving coefficient is calculated as follows: [2x concentration of the filtrate] / [inlet concentration + outlet concentration].

Advantageously but not necessarily, the membrane has a bacteria retention of at least log₁₀9 (in particular, at least log₁₀10; more in particular, at least log₁₀11). According to some non-limiting embodiments, the membrane has a bacteria retention of up to log₁₀15.

Advantageously but not necessarily, the membrane has a virus retention of at least log₁₀6 (in particular, at least log₁₀7; more in particular, at least log₁₀8). According to some non-limiting embodiments, the membrane has a virus retention of up to log₁₀12.

Advantageously but not necessarily, the membrane has an endotoxin retention of at least log₁₀3 (in particular, at least log₁₀4; more in particular, at least log₁₀5). According to some non-limiting embodiments, the membrane has an endotoxin retention of up to logio9.

It should be noted that in the present text the retentions are measured in accordance with the standard ASTM F838.

According to specific embodiments, the membrane comprises (is made of) a polymer, in particular selected from the group consisting of: polysulfone, polyethersulfone, polyacrylonitrile, ethylene vinyl alcohol, polyphenylene, polysulfone with polyvinylpyrrolidone, polyethersulfone with polyvinylpyrrolidone, polyimide, polyetherimide, polyetherketone (and derivatives thereof).

As known: polysulfone is a polymer that has (consists of) the following repeating unit: 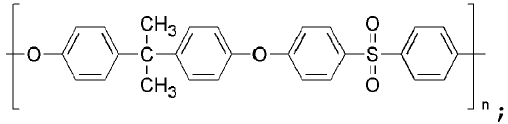 the polyethersulfone is a polymer that has (consists of) the following repeating unit 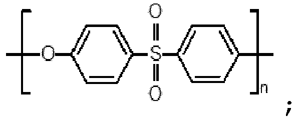 the polyphenylsulfone is a polymer that has (consists of) the following repeating unit 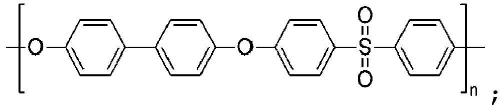 the polyacrylonitrile is a polymer that has (consists of) the following repeating unit 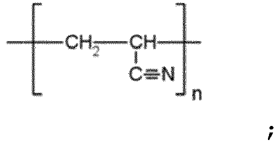 the ethylene vinyl alcohol is a copolymer of ethylene and vinyl alcohol that has (consists of) the following repeating structure 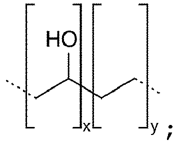 the polyphenylene is a polymer that has (consists of) the following repeating unit 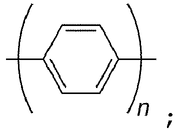 the polysulfone with polyvinylpyrrolidone is a mixture of polysulfone and polyvinylpyrrolidone, which is a polymer that has (consists of) the following repeating unit 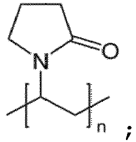 the polyethersulfone with polyvinylpyrrolidone is a mixture of polyethersulfone and polyvinylpyrrolidone;
the polyimide is a family of polymers that has (consists of) the following repeating unit 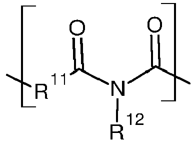 wherein R¹¹ and R¹² are, each independently from the other, aliphatics (alkyls) or aromatics (in particular, C₄-C₆ aromatics);
the polyetherimide is a polymer that has (consists of) the following repeating unit 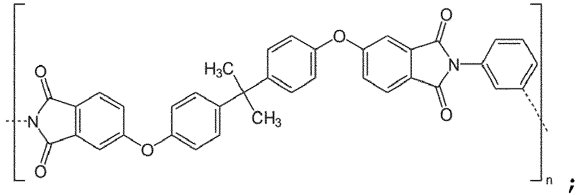 and the polyetherketone is a polymer that has (consists of) the following repeating unit

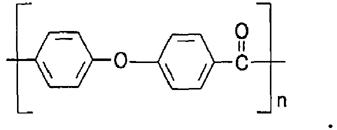

More precisely, the membrane comprises (is made of) a polymer selected in the group consisting of: polysulfone, polyethersulfone, polyphenylsulfone, polyacrylonitrile, ethylene vinyl alcohol, polysulfone with polyvinylpyrrolidone, polyethersulfone with polyvinylpyrrolidone, polyetherimide, polyetherketone. Even more precisely, the membrane comprises (is made of) a polymer selected in the group consisting of: polyethersulfone with polyvinylpyrrolidone, polysulfone, polyethersulfone, polyphenylsulfone, polyetherimide, polyetherketone.

According to some embodiments, the membrane comprises (is made of) a polymer selected in the group consisting of: polyethersulfone with polyvinylpyrrolidone, polysulfone, polyethersulfone, polyphenylsulfone (and a combination thereof). In some specific cases, the membrane comprises (is) polyethersulfone with polyvinylpyrrolidone. In some specific cases, the membrane comprises (is) polyethersulfone.

In particular, the membrane is selected in the group consisting of: a flat membrane, a tubular membrane, a plurality of fibres, in particular hollow fibres, and a combination thereof.

Advantageously but not necessarily, the membrane comprises (is) a plurality of fibres, in particular hollow fibres. More precisely, in other words, the membrane is in the form of a plurality of hollow fibres.

In particular, the fibres can be prepared according to what is described in the patent application with publication number EP2316560A1. Fibres of this type are also marketed by Medica spa (Via Degli Artigiani, 7, 41036 Medolla MO, Italy) with the name di Medisulfone^{®} and Versatile-PES^{®}.

It should be noted that it has been experimentally observed that when a membrane comprising a plurality of fibres is used, the membrane is surprisingly much less subject to clogging (for example with respect to a flat membrane of the same material).

In particular, each membrane has a (respective) inner lumen.

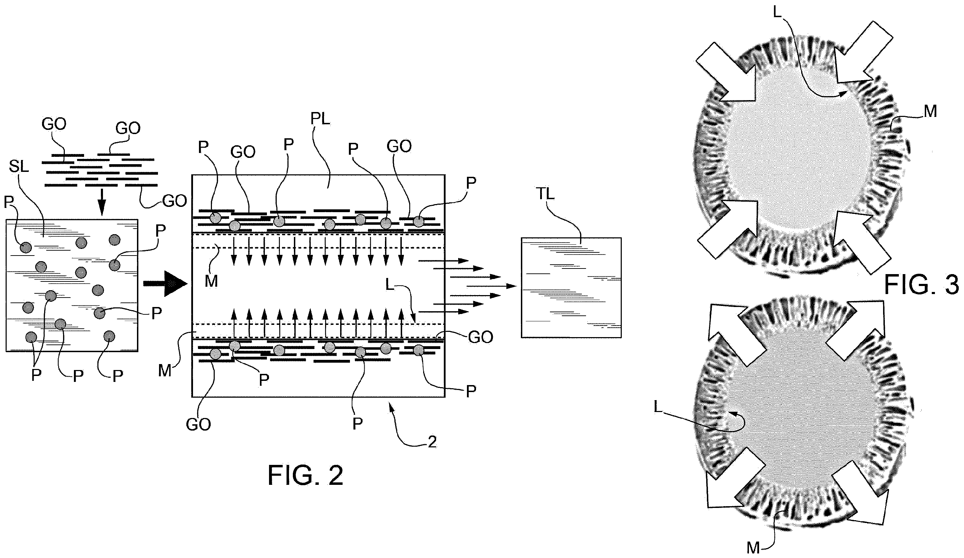

According to some non-limiting embodiments, each hollow fibre has a lateral wall, in particular comprising (consisting of) the aforesaid polymer. The lateral wall delimits the (respective) inner lumen. The structure of the hollow fibre membrane is shown by way of example in the photographs included in Fig. 3.

In particular, the lateral wall (is porous and) has an outer surface provided with pores with a diameter from about 0.1 µm to about 15 µm.

Unless explicitly specified to the contrary, in the present text the average diameter of the pores is measured by SEM. More precisely, calculation of the average diameter is carried out by measuring the size in a single direction (selected randomly) of fifty pores (selected randomly) and calculating the average. In particular, a SEM instrument is used.

According to some non-limiting embodiments, the inner lumen has a cross section with an area from about 2000 µm² (in particular, from about 5000 µm²) to about 200000 µm².

In particular, the inner lumen has an inner (more in particular, average) diameter of up to about 1000 µm (more in particular, up to about 900 µm; even more in particular, up to about 400 µm). According to some non-limiting embodiments, the inner lumen has an inner (more in particular, average) diameter of at least about 50 µm (in particular, of at least about 70 µm; more in particular, of at least about 80 µm; even more in particular, of at least about 100 µm).

Advantageously but not necessarily, the lateral wall has a thickness from about 25 µm to about 150 µm.

According to some non-limiting embodiments, the lateral wall has a thickness from about 40 (more precisely, from about 45) to about 400 (more precisely, to about 100) µm. In some cases, the membrane has a thickness of up to about 60 (in particular, up to about 50) µm.

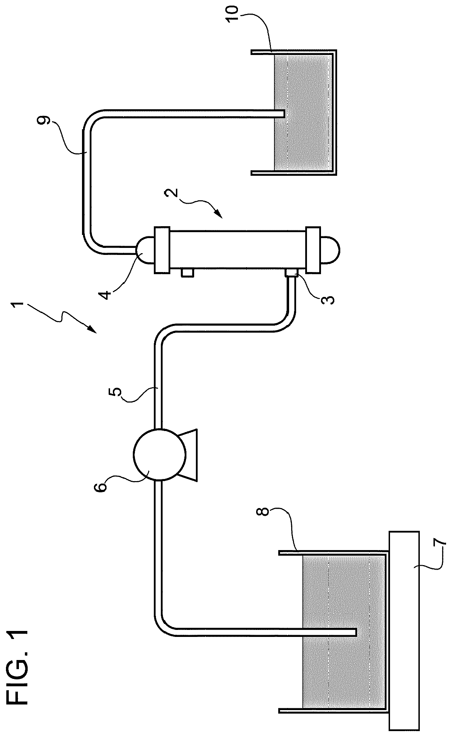

In Fig. 1, the reference number 1 indicates as a whole a device for the treatment of a starting liquid containing pollutants. In particular, the device 1 is configured (designed) to implement the method according to the first aspect of the present invention (described above).

The device 1 comprises a porous membrane as defined above. In particular, the device comprises a cartridge 2 comprising (internally) the aforesaid plurality of fibres.

More precisely but not necessarily, the fibres are arranged inside the cartridge 2 so that their longitudinal extension is substantially parallel to the longitudinal extension of the cartridge 2.

In particular, the cartridge 2 comprises an inlet 3 configured to allow a liquid to enter the cartridge 2 and an outlet 4 to allow a liquid to exit from the cartridge 2.

According to some non-limiting embodiments (as depicted in Fig. 1, in Fig. 2 and in the option on the left side of Fig. 3), the structure of the cartridge 2 and the arrangement of the fibres inside the cartridge are such that, in use, the liquid (in particular, the pre-treated liquid) that enters the cartridge 2 flows from the outside of the fibres to the inside (into the lumen) of said fibres. In this way, in use, filtration takes place and the treated liquid moves along the lumen and exits through the outlet 4.

The device 1 also comprises (at least) a duct 5 (in particular, fluidly connected to the cartridge 2; more precisely, fluidly connected to the inlet 3) and (at least) a pump 6 configured (designed) to convey the pre-treated liquid (in particular, containing the graphene oxide) along the duct 5 and through said porous membrane (in particular, through the cartridge 2).

According to some non-limiting embodiments, the pump 6 is a peristaltic pump.

Advantageously but not necessarily, the device 1 comprises a mixer 7 (for example a magnetic mixer) to stir the starting liquid containing the graphene oxide (in particular, so as to obtain the pre-treated liquid).

According to some non-limiting embodiments, the device 1 also comprises a container 8, which is configured (designed) to contain the starting liquid containing the graphene oxide (and the pre-treated liquid).

In these cases, in particular, the duct 5 extends from the container 8 to the porous membrane (in particular, to the cartridge 2).

Additionally or alternatively, the mixer 7 is configured (designed) to stir the content of the container 8.

Advantageously but not necessarily, the device 1 also comprises a duct 9 which is connected to the cartridge 2 (more precisely but not necessarily, to the outlet 4). In particular, in use, the treated liquid passes along the duct 9.

According to some non-limiting embodiments, the device 1 also comprises a container 10 (to receive and/or collect the treated liquid). In these cases, in particular, the duct 9 extends from the outlet 4 to the container 10.

Fig. 2 schematically depicts the method described above (and, partly, the operation of the device 1). In this figure, the pollutants are indicated with the letter P, the particles (sheets) of graphene oxide are indicated with the letters GO, the starting liquid is indicated with the letters SL, the pre-treated liquid is indicated with the letters PL, the porous membrane is indicated with the letter M, the lumen is indicated with the letter L and the treated liquid is indicated with the letters TL.

In particular, during the filtering step, the pre-treated liquid is directed (transmembrane) from the outside of the fibres towards the inner lumen of said fibres and, more precisely but not necessarily, the treated liquid (obtained by flowing through the lateral wall) is obtained in (and moves along) the inner lumen; alternatively, the pre-treated liquid is directed (transmembrane) from the inside (of the lumen) of the fibres towards the outside of said fibres and, more precisely but not necessarily, the treated liquid (obtained by flowing through the lateral wall) is obtained (and moves) outside the fibres.

Fig. 3 schematically depicts (the abovementioned) two alternatives of implementation of the filtering step. In the alternative on the left, the pre-treated liquid is caused to flow from the outside towards the inside of each fibre. In other words, during filtration the pre-treated liquid is pushed from the outside towards the inside of the fibre so that the treated liquid collects in the lumen L.

In the alternative on the right, the pre-treated liquid is caused to flow from the inside towards the outside of each fibre. In other words, during filtration the pre-treated liquid is pushed from the lumen L towards the outside of the fibre so that the treated liquid collects outside the fibre.

In accordance with a further aspect of the present invention there is provided a kit for the treatment of a starting liquid containing pollutants. In particular, the kit is configured (designed) to implement the method of the first aspect of the first invention.

The kit comprises the graphene oxide and the porous membrane (in particular, the cartridge 2 described above).

The kit also comprises at least one duct (corresponding to the aforesaid duct 5) and at least one pump (corresponding to the pump 6) to convey the pre-treated liquid containing the graphene oxide along the duct (5) and through the porous membrane.

Advantageously but not necessarily, the kit also comprises a second duct (corresponding to the duct 9). In these cases, in particular, the pump (6) is configured to convey liquid also along the second duct (9).

Advantageously but not necessarily, the kit also comprises a mixer (corresponding to the mixer 7) to stir the starting liquid containing the graphene oxide (so as to obtain the pre-treated liquid).

Advantageously but not necessarily, the kit also comprises two containers (corresponding to the containers 8 and 9).

In particular, the kit comprises the device 1 described above (more precisely, its components - optionally separated from one another - as described above).

According to some non-limiting embodiments, the kit also comprises a sonicator (of per se known type and not depicted) to implement the sonication step described above.

Unless explicitly indicated to the contrary, the content of the references (articles, books, patent applications, etc.) cited in this text is fully incorporated herein. In particular, the references mentioned are incorporated herein by reference.

Further features of the present invention will be apparent from the following description of non-limiting examples provided purely for illustrative purposes.

### Example 1

This example shows the efficacy of the method in accordance with the present invention.

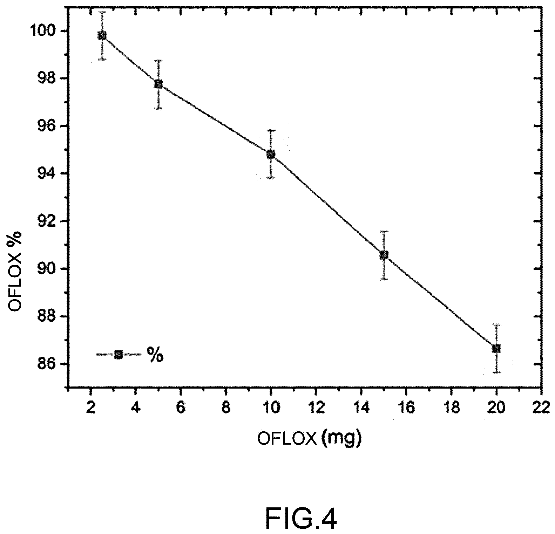

Different amounts of ofloxacin (OFLOX) were added to a sample of tap water so as to obtain water containing ofloxacin (which simulates a pollutant). The results are shown in Fig. 4 (the milligrams of OFLOX added to 100 ml of water are indicated in the abscissa and the percentage of OFLOX removal for each test is indicated in the ordinate).

As can be noted (notwithstanding its simplicity) the method in accordance with the present invention has proved to be very efficient.

The procedure used was the following: GO (Abalonyx, graphene oxide powder < 35 mesh, product code 1,8, XPS (O/C ratio 0.39±0.01, C 70.1±0.9%, O 27.2±0.9, N 0.2±0.1 %, S 1.0±0.1 %, Si 0.8±0.1, Cl 0.7±0.1 %, Manganese, < 0.1%)) was dispersed in water (conc. 2 mg/ml) and sonicated by means of ULTRASONIC CLEANER USC 600-TH, Vwr, for 4 hours (sheets with lateral size < 1 µm). The suspension was then added to a solution of ofloxacin and the mixture placed under stirring for 30 minutes. Subsequently, the mixture was filtered through a Versatile PES^{®} hollow fibre filter and the filtered solution analysed by HPLC.

### Example 2

This example describes specific operating modes with which the virus retentions reported in this text were and are measured.
Test Virus: bacteriophage phiX174
Host for the growth of high titre phages: E. coli
Initial inoculum:> 6Logs

### Retention Test Protocol

NOTE - The filters tested are connected to tubes with pump segment to allow flow through a peristaltic pump. The tubes connected to each end will be of about 50 cm.

Carry out steps 1-4 for each filter tested.

### STEP 1: Priming with saline solution

Carry out single pass priming on filter with 2000 ml of sterile NaCl 0.9%, 37 ° C.
Flow rate: 100-1000 ml / min
Collection of the negative control: upon completion of priming collect a sample of permeate from each filter (CTRL -).
Note: stop the peristaltic pump and clamp the inlet and outlet tubes to ensure that the filter remains completely filled with saline solution and that no air is introduced into the filter.

### STEP 2: Virus Retention Test with saline solution: 10⁶ pfu/mL

Carrying out the retention test with saline solution: filter from 1000 to 5000 ml of sterile NaCl 0.9% containing viral suspension (Bacteriophage PhiX174) at a concentration greater than or equal to 10⁶ pfu/mL, at 37°C, in a circuit with a filter. Flow:
- Open the filter inlet clamp (keep the outlet clamp closed)
- Flow rate: 100-1000 ml / min
- After 20 seconds open the filter outlet clamp for 5 seconds

Collection of the positive control: collect the positive control after having filtered 1 1 of virus solution, from a sampling point located on the filter inlet tube. This is to confirm the defined virus concentration.

Determine the concentration of the viral suspension (10⁶ pfu / ml) .

Collection of the filtrate: collect samples of filtrate at different volumes (30%, 50% and 99% filtrate volume) from the sampling point on the filtrate collection tube.

Analyse each sample collected (diluting if necessary) by seeding on plates containing bacterial cultures and determining the LRV (logarithm retention value) for each sample (3 values reported for each filter).

### Example 3

This example describes specific operating modes with which the endotoxin retentions reported in this text were and are measured.

### DEFINITIONS

LAL TEST (Limulus Amoebocyte Lysate Test): test for determining the amount of bacterial endotoxin content.
LYSATE: lyophilised extract of blood cells (amoebocytes) of the Limulus polyphemus.
BACTERIAL ENDOTOXIN: lipopolysaccharide (LPS) present on the wall of Gram negative bacteria.
APYROGENIC: without substances that cause an increase in body temperature.
DEPYROGENATION: procedure for eliminating pyrogenic substances from a sample or from a material.
KINETIC CHROMOGENIC METHOD: measurement of the intensity of the colour directly correlated to the endotoxin concentration in a sample.
ENDOTOXIN INDICATOR: endotoxin with 10 million EU (Endotoxin Units) used for validations.
SENSITIVITY: capacity of a lysate to react in the presence of a given amount of endotoxins.
EU: Endotoxin Unit.

### OPERATING MODES

### Preparation of the ultrafiltered water

### Filter washing

- set up the connection between the filter, the relevant tubes and the peristaltic pump;
- fill a beaker with 2000 ml of sterile apyrogenic water and connected it to the circuit inlet. Start the peristaltic pump and wash the filter; washing must be carried out so as to cause 250-1000 ml of water to flow into the inner lumen of the fibre (causing the liquid to flow inside the fibres, without forcing ultrafiltration, carry out this washing method ONLY if the filter model permits it) and 250-1000 ml in ultrafiltration mode (forcing the filter to ultrafilter according to the operating modes), adjust the flow so as to set it to about 100 to 1000 ml/minute, using a stopwatch;
- completely empty the filter and the circuit of all wash water, eliminating the water exiting in a specific receptacle.

Take a sample of wash water from the ultrafiltered side, towards the end of the washing process and use it as negative control.

Completely empty the filter and the circuit of all wash water, eliminating the water exiting in a specific receptacle.

### Preparation of the contaminant solution

Bring the endotoxin indicator and sterile apyrogenic water to room temperature.

Reconstitute the endotoxin indicator according to the supplier's instructions.

Fill a depyrogenated beaker with 250-1000 ml of sterile apyrogenic water, to which the amount of endotoxic solution necessary to obtain a final concentration of 5000 EU/ml ±50% must be added, stirring with the magnetic stirrer for 2 minutes.

The final concentration of the contaminant solution is strictly linked to the sensitivity of the endotoxin detection method used; if other levels of efficiency are required, the concentrations and sensitivities must be adapted to the test conditions applied.

### Performance of the test

Connect the beaker with the contaminant solution to the filter inlet and complete the connections according to the functional diagram of the filter subjected to testing, then start the peristaltic pump.

Collect the eluate in an apyrogenic beaker and carry out the LAL test using the kinetic chromogenic or turbidimetric method.

The sample coming from the eluate can be tested as is or dilution may be necessary to avoid possible interferences; if dilution is required, it must be within the Maximum Dilution. In this case, the result will be given by the sensitivity of the lysate multiplied by the dilution factor.

## Claims

1. A method for the treatment of a starting liquid containing pollutants; the method comprises
an addition step, during which graphene oxide is added to the starting liquid so as to adsorb at least part of said pollutants and obtain a pre-treated liquid; and
a filtering step, during which the pre-treated liquid is caused to flow through a porous membrane comprising a plurality of hollow fibres so that said graphene oxide is blocked and a treated liquid is obtained downstream of the membrane, said treated liquid having a smaller pollutant content than the starting liquid.

2. The method according to claim 1, wherein each hollow fibre has an inner lumen and a lateral wall; during the filtering step, the pre-treated liquid is caused to flow from the outside towards the inside of each hollow fibre so that the treated liquid is obtained in the inner lumen or the pre-treated liquid is caused to flow from the inner lumen towards the outside of the hollow fibre so that the treated liquid is collected outside the hollow fibre; in particular, the starting liquid is mainly water.

3. The method according to claim 1 or 2, wherein said porous membrane has a bacteria retention of at least log₁₀9 (in particular, at least log₁₀10; more in particular, at least log₁₀11).

4. The method according to any one of the preceding claims, wherein said porous membrane has a porosity with cut-off smaller than 1500 Kdalton.

5. The method according to any one of the preceding claims, wherein said graphene oxide consists of sheets with a lateral size of at least about 150 nm, in particular up to about 1 µm.

6. The method according to any one of the preceding claims, and comprising a sonication step, which is prior to the addition step and during which said graphene oxide is sonicated, in particular by means of ultrasounds.

7. The method according to any one of the preceding claims, wherein, during the addition step, a suspension of graphene oxide in the starting liquid is obtained; the suspension is maintained for at least 5 minutes before the filtering step.

8. The method according to claim 7, wherein said suspension is stirred, in particular for at least 5 minutes, before the filtering step.

9. The method according to any one of the preceding claims, wherein said porous membrane comprises (in particular, is made of) a polymer chosen in the group consisting of: polysulfone, polyethersulfone, polyacrylonitrile, ethylene vinyl alcohol, polyphenylene, polysulfone with polyvinylpyrrolidone, polyethersulfone with polyvinylpyrrolidone, polyimide, polyetherimide, polyetherketone.

10. The method according to claim 9, wherein said porous membrane comprises (in particular, is made of) polysulfone with polyvinylpyrrolidone.

11. The method according to any one of the preceding claims, wherein, during the addition step, at least about 0.1 mg (in particular, at least about 0.5 mg) of graphene oxide is added per millilitre of starting liquid.

12. A kit to implement a method for the treatment of a starting liquid (SL) containing pollutants (P) according to any one of the preceding claims and comprising: the graphene oxide (GO); the porous membrane (M) comprising a plurality of hollow fibres and having a bacteria retention of at least logio9 (in particular, at least log₁₀10; more in particular, at least log₁₀11); at least one first duct (5); and at least one pump (6) to convey the pre-treated liquid (PL) containing said graphene oxide (GO) along the first duct (5) and through said porous membrane (M), in particular so as to obtain the treated liquid (TL) .

13. The kit according to claim 12 and comprising a mixer (7) to stir the starting liquid (SL) containing said graphene oxide (GO); at least one second duct (9); and a cartridge (2) containing said porous membrane (M) and comprising an inlet (3), which is configured to be connected to the first duct (5), and an outlet (4), which is configured to be connected to the second duct (9);
said at least one pump (6) being configured to convey liquid also along the second duct (9).

14. The kit according to claim 12 or 13, wherein said membrane has a porosity with cut-off smaller than 1500 Kdalton.
